# EUROPÄISCHE PATENTSCHRIFT

(11) **EP 1 582 712 B1**
(45) Veröffentlichungstag und Bekanntmachung des Hinweises auf die Patenterteilung: **12.12.2007**
(21) Anmeldenummer: 05101598.0
(22) Anmeldetag: 02.03.2005
(51) Int. Cl.: F01N 3/20, F01N 3/025, F01N 3/029, B01D 53/90

(54) **Vorrichtung zum Einbringen von Kraftstoff in einen Abgasstrang**
Device for introducing fuel into an exhaust gas line
Dispositif pour introduire du combustible dans la ligne d'échappement

(30) Priorität: 29.03.2004 DE 102004015805
(43) Veröffentlichungstag der Anmeldung: 05.10.2005
(60) Teilanmeldung: 06127194.6
(73) Patentinhaber: J. Eberspächer GmbH & Co. KG, 73730 Esslingen (DE)
(72) Erfinder: Rudelt, Josef, 73773, Aichwald (DE); Gaiser, Gerd, 72768, Reutlingen (DE)
(74) Vertreter: Patentanwalts-Partnerschaft Rotermund + Pfusch + Bernhard

(56) Entgegenhaltungen:
- WO-A-00/66885
- WO-A-99/41492
- WO-A-03/084647
- DE-A1- 4 436 397
- DE-C- 349 770
- DE-T1- 19 581 135
- PATENT ABSTRACTS OF JAPAN Bd. 1997, Nr. 08, 29. August 1997 (1997-08-29) & JP 09 096212 A (MITSUBISHI MOTORS CORP), 8. April 1997 (1997-04-08)

## Beschreibung

Die vorliegende Erfindung betrifft eine Vorrichtung zum Einbringen von Kraftstoff in einen Abgasstrang einer Brennkraftmaschine, insbesondere in einem Kraftfahrzeug, sowie einen Abgasstrang mit einer solchen Vorrichtung.

Aus der DE 30 46 258 A1 ist eine Vorrichtung bekannt, die eine Einspritzdüse zum Einspritzen von unter Einspritzdruck stehendem Kraftstoff in den Abgasstrang durch eine Radialöffnung in einem Rohrabschnitt des Abgasstrangs umfasst. Weitere Vorrichtungen zum Einbringen von Kraftstoff in einen Abgasstrang mittels einer Einspritzdüse sind beispielsweise aus der US 2003/0140621 A1 und aus der US 2003/0230076 A1 bekannt.

Um die Partikelemission bei Brennkraftmaschinen, insbesondere von Kraftfahrzeugen, zu reduzieren, ist es z.B. aus den oben genannten Dokumenten allgemein bekannt, im Abgasstrang der Brennkraftmaschine ein Partikelfilter anzuordnen. Ein derartiges Partikelfilter wird in der Regel auch als Rußfilter bezeichnet, da es sich bei den im Abgas mitgeführten Partikeln, insbesondere bei Dieselmotoren, vorwiegend um Ruß handelt. Im Betrieb der Brennkraftmaschine reichern sich die ausgefilterten Partikel im jeweiligen Partikelfilter an, was allmählich zu einem Gegendruckanstieg bei der Durchströmung des Partikelfilters führt. Dementsprechend ist es üblich, das Partikelfilter regelmäßig einem Regenerationsprozess zu unterwerfen, in dem die darin abgelagerten Partikel abgebrannt werden. Um eine derartige Verbrennungsreaktion zur Regeneration des Partikelfilters initiieren zu können, muss die Temperatur im Partikelfilter bzw. in dem dem Partikelfilter zugeführten Abgas erhöht werden.

Grundsätzlich kann eine derartige Temperaturerhöhung im Abgas durch motorseitige Maßnahmen realisiert werden. Beispielsweise kann mit Hilfe einer entsprechend ausgestalteten Einspritzeinrichtung der Brennkraftmaschine zusätzlicher Kraftstoff so spät in die Brennräume der Brennkraftmaschine eingespritzt werden, dass dieser nicht mehr verbrennt, so dass unverbrannter Kraftstoff in den Abgasstrang gelangt. Stromauf des Partikelfilters ist dann zweckmäßig ein Oxidationskatalysator angeordnet, der eine Umsetzung der zusätzlich eingedüsten Kraftstoffmenge bewirkt. Hierbei kommt es zu einer stark exothermen Reaktion, was die gewünschte Temperaturerhöhung im Abgas bewirkt.

Derartige motorseitige Maßnahmen sind zwar vergleichsweise preiswert realisierbar, haben jedoch auch gewisse Nachteile. Beispielsweise kann eine späte Nacheinspritzung von Kraftstoff zu einer Verdünnung des Motorschmieröls sowie zu einer mangelnden Schmierung der Kolben in den Zylindern führen.

Um dies zu vermeiden, kommen Vorrichtungen der eingangs genannten Art zur Anwendung, die mit Hilfe einer Einspritzdüse die Eindüsung von Kraftstoff stromab der Brennkraftmaschine ermöglichen.

Aus der WO 03/084647 A1 ist eine Einspritzvorrichtung bekannt, deren Einspritzdüse mit einem Kühlmittelkreis wärmeübertragend gekoppelt ist. Dabei ist die Einspritzdüse an einem Düsenträger befestigt, der seinerseits an einem Rohrabschnitt befestigt ist, durch dessen Radialöffnung die Einspritzdüse den Kraftstoff einspritzt. Dieser Düsenträger enthält eine Düsenaufnahme, die den Düsenträger radial durchsetzt und in besagter Radialöffnung des Rohrabschnitts offen mündet. Zwischen Düsenaufnahme und Einspritzdüse sind ringförmige, axial begrenzte Kontaktstellen vorgesehen.

Aus der DE 44 36 297 A1 ist eine Dosiereinrichtung zum Einbringen von Harnstoff in einen Druckluftpfad für eine Brennkraftmaschine bekannt, wobei eine Kühleinrichtung in Form eines Kühlmantels in einen Trägerkörper integriert ist, der ein Dosierventil aufnimmt. Dieser Kühlmantel ist an einen Kühlkreis der Brennkraftmaschine angeschlossen.

Aus der JP 09/096212 ist eine weitere Einspritzdüse bekannt, die in einen Kühlkreis einer Brennkraftmaschine integriert ist. Weitere Einspritzeinrichtungen, die mit einem Kühlkreis einer Brennkraftmaschine gekühlte Einspritzdüsen aufweisen, sind aus der DE 195 81 135 T1 und der WO 99/41492 A2 bekannt.

Aus der WO 00/66885 A1 ist es bekannt, eine Einspritzdüse, mit deren Hilfe ein Reduktionsmittel in den Abgasstrom eingespritzt werden kann, mit Hilfe eines Wärmerohrs, sogenanntes "Head Pipe", zu kühlen, wodurch das Wärmerohr einerseits mit einem Dosierventil und andererseits mit einem Kondensator wärmeübertragend gekoppelt ist.

Auch die DE-PS 349 770 zeigt eine Einspritzdüse für eine Brennkraftmaschine, die an einen Kühlkreis angeschlossen ist.

Aus der JP 2002-030919 ist ein Abgasstrang für eine Brennkraftmaschine bekannt, der ein Partikelfilter und stromauf davon einen Oxidationskatalysator sowie eine Vorrichtung zum Einbringen von Kraftstoff in den Abgasstrang aufweist, um durch Umsetzen von Kraftstoff im Oxidationskatalysator einen zur Regeneration des Partikelfilters dienenden Abbrandvorgang initiieren zu können. Dabei ist ein Rohrabschnitt des Abgasstrangs, an dem die Vorrichtung am Abgasstrang angebracht ist, stromauf des Oxidationskatalysators angeordnet. Ferner wird die Einspritzdüse aus einem Kraftstoffreservoir mit Kraftstoff versorgt, aus dem auch die Brennkraftmaschine mit Kraftstoff versorgt wird. Dementsprechend ist die Einspritzdüse an ein Kraftstoffversorgungssystem der Brennkraftmaschine angeschlossen.

Aus der JP 09-096212 ist ebenfalls ein Abgasstrang mit einer Einspritzeinrichtung bekannt, wobei eine Einspritzdüse der Einspritzeinrichtung mit einem Kühlmittelkreis wärmeübertragend gekoppelt ist. Dabei ist die Einspritzdüse an einem Düsenträger befestigt, der seinerseits an einem Rohrabschnitt befestigt, an dem die Einspritzeinrichtung am Abgasstrang angebracht ist. Der Düsenträger enthält eine Düsenaufnahme, die den Düsenträger radial durchsetzt und in der Radialöffnung des Rohrabschnitts offen mündet. Ferner ist der Düsenträger mit einem Kühlmittelkreis wärmeübertragend gekoppelt, so dass die Einspritzdüse mittelbar durch oder über den Düsenträger mit dem Kühlmittelkreis wärmeübertragend gekoppelt ist. Dieser Kühlmittelkreis ist dabei an einen Kühlkreis der Brennkraftmaschine angeschlossen.

Die vorliegende Erfindung beschäftigt sich mit dem Problem, für eine Vorrichtung bzw. einen Abgasstrang der eingangs genannten Art eine verbesserte Ausführungsform anzugeben, die sich insbesondere durch eine erhöhte Lebensdauer auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Einspritzdüse indirekt und möglichst intensiv zu kühlen. Durch die Kühlung der Einspritzdüse kann die der Einspritzdüse im Betrieb der Brennkraftmaschine über den Abgasstrang zugeführte Wärme abgeführt werden, wodurch die Einspritzdüse auf einem Temperaturniveau betrieben werden kann, das erheblich unterhalb des Temperaturniveaus des Abgasstrangs liegt. Dies hat vielfältige Vorteile. Zum einen ist die Materialbeanspruchung innerhalb der Einspritzdüse dadurch reduziert, wodurch sie eine erhöhte Lebensdauer erhält. Zum anderen ist die Gefahr einer Selbstentzündung des Kraftstoffs innerhalb der Einspritzdüse erheblich reduziert. Des Weiteren kann ein Ventil der Einspritzdüse relativ nahe an einem wenigstens einen Spritzloch aufweisenden Düsenkopf positioniert sein, wodurch sich ein Totvolumen an Kraftstoff, das sich zwischen dem wenigstens einen Spritzloch und dem genannten Ventil befindet, reduziert. Bei ungekühlten Einspritzdüsen muss ein relativer großer Abstand zwischen dem wenigstens einen Spritzloch und dem genannten Ventil eingehalten werden, um durch die hohen Temperaturen die Funktionsfähigkeit des Ventils nicht zu beeinträchtigen. In der Folge vergrößert sich bei einer ungekühlten Einspritzdüse das Totvolumen an Kraftstoff. Je größer dieses Totvolumen ist, desto ungenauer lässt sich die zusätzliche Kraftstoffzuführung in den Abgasstrang dosieren. Dementsprechend führt die gekühlte Einspritzdüse letztlich auch zu einer verbesserten Dosierbarkeit des zusätzlich eingespritzten Kraftstoffs.

Die Kühlung der Einspritzdüse wird dabei mit Hilfe eines Kühlmittelkreises bewirkt, der auf geeignete Weise mit der Einspritzdüse wärmeübertragend gekoppelt ist.

Dadurch, dass die Einspritzdüse an einem Düsenträger befestigt ist, der seinerseits am Rohrabschnitt befestigt ist, wobei dann der Düsenträger mit dem Kühlmittelkreis wärmeübertragend gekoppelt ist, so dass die Einspritzdüse mittelsbar durch oder über den Düsenträger mit dem Kühlmittelkreis wärmeübertragend gekoppelt ist, wird der Düsenträger direkt durch den Kühlmittelkreis gekühlt, während die daran befestigte Einspritzdüse indirekt über den Düsenträger durch den Kühlmittelkreis gekühlt wird. Diese Bauweise hat den Vorteil, dass eine herkömmliche, also preiswerte Einspritzdüse verwendet werden kann, so dass der Düsenträger quasi eine Art Adapter zur Realisierung einer Kühlung der Einspritzdüse darstellt. Darüber hinaus kann auch eine entsprechende Ausgestaltung des Düsenträgers eine intensive Kühlung für die Einspritzdüse realisiert werden.

Dadurch, dass der Düsenträger eine Düsenaufnahme enthält, die den Düsenträger zumindest radial durchsetzt und in der Radialöffnung des Rohrabschnitts offen mündet, wobei dann die Einspritzdüse mit einem wesentlichen Längsabschnitt in diese Düsenaufnahme eingesetzt ist, so dass sich ein wenigstens ein Spritzloch enthaltender Düsenkopf der Einspritzdüse im Bereich der Radialöffnung befindet, ist die Einspritzdüse innerhalb der Düsenaufnahme quer zu ihrer Längsrichtung vollständig vom Düsenträger umschlossen, und zwar bis zu ihrem Düsenkopf. Auf diese Weise kann eine intensive Kühlung der Einspritzdüse realisiert werden, da der Düsenträger entlang einer relativ großen Oberfläche mit der Einspritzdüse kontaktierbar ist.

Bevorzugt wird auch hier eine Variante, bei welcher ein Abschnitt des Kühlmittelkreises in den Düsenträger integriert ist, wodurch sich eine besonders effektive Kühlung des Düsenträgers und somit der Einspritzdüse erreichen lässt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen stark vereinfachten Längsschnitt durch eine Vorrichtung nach der Erfindung,
- Fig. 2: einen Querschnitt der Vorrichtung entsprechend Schnittlinien II in Fig. 1,
- Fig. 3: eine geschnittene Draufsicht entsprechend Schnittlinien III in Fig. 1,
- Fig. 4: eine schaltplanartige Prinzipdarstellung für eine Anordnung der erfindungsgemäßen Vorrichtung bei einer Brennkraftmaschine.

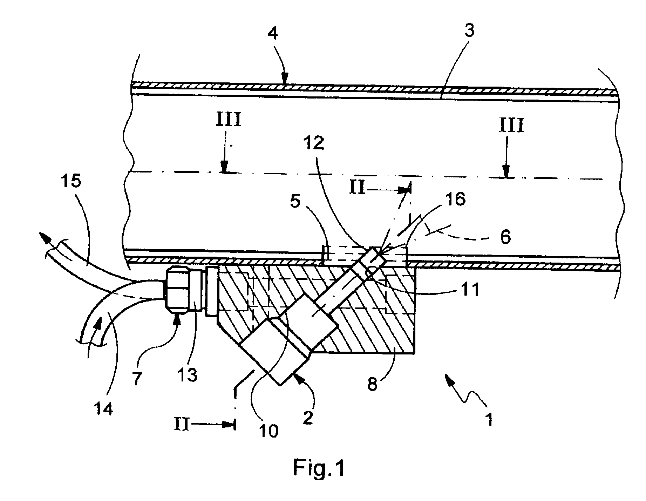

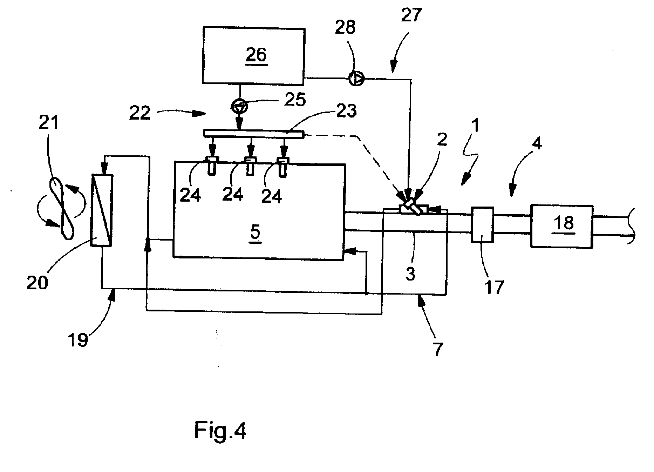

Entsprechend den Fig. 1 bis 3 umfasst eine erfindungsgemäße Vorrichtung 1 eine Einspritzdüse 2 und ist so an einem Rohrabschnitt 3 eines Abgasstrangs 4 einer in Fig. 4 gezeigten Brennkraftmaschine 5 angeordnet, dass die Einspritzdüse 2 Kraftstoff durch eine Radialöffnung 5 in den Abgasstrang 4 einspritzen oder eindüsen kann, die im Rohrabschnitt 3 ausgebildet ist. In Fig. 1 ist ein mit Hilfe der Einspritzdüse 2 erzeugbarer Sprüh- oder Spritzstrahl angedeutet und mit 6 bezeichnet. Die Einspritzdüse 2 ist elektrisch ansteuerbar und regelbar ausgestaltet.

Erfindungsgemäß ist die Einspritzdüse 2 gekühlt. Zu diesem Zweck dient ein Kühlmittelkreis 7, mit dem die Einspritzdüse 2 wärmeübertragend gekoppelt ist. Im Kühlmittelkreis 7 zirkuliert in üblicher Weise ein geeignetes Kühlmedium, vorzugsweise eine Kühlflüssigkeit. Durch die Kühlung kann die thermische Belastung der Einspritzdüse 2, die sich aufgrund ihrer Positionierung unmittelbar am Abgasstrang 4 zwangsläufig ergibt, erheblich reduziert werden. Dabei nimmt der Kühlmittelkreis 7 von der Einspritzdüse 2 Wärme an und führt diese über das zirkulierende Kühlmittel ab. Hierdurch ergibt sich eine intensive Kühlwirkung für die Einspritzdüse 2.

Grundsätzlich ist es möglich, die Einspritzdüse 2 direkt mit dem Kühlmittelkreis 7 wärmeübertragend zu koppeln. Besonders vorteilhaft ist es dann, einen Abschnitt des Kühlmittelkreises 7 in die Einspritzdüse 2 zu integrieren.

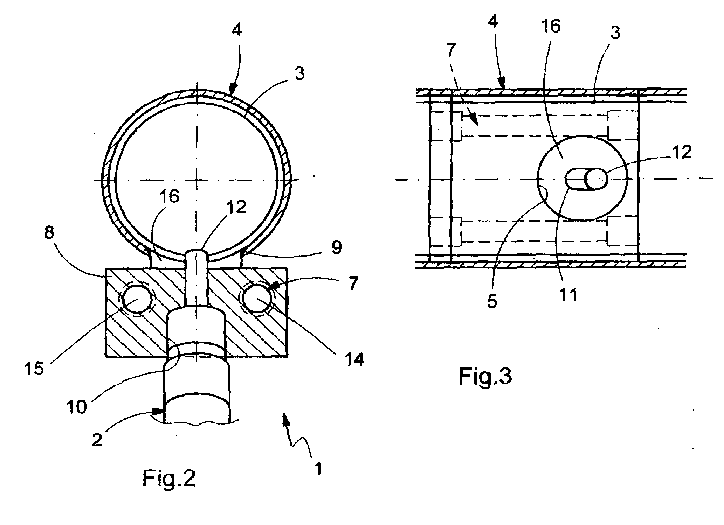

Bevorzugt wird jedoch die hier gezeigte Ausführungsform, bei welcher die Einspritzdüse 2 indirekt mit dem Kühlmittelkreis 7 wärmeübertragend gekoppelt ist. Hierzu weist die Vorrichtung 1 einen Düsenträger 8 auf, der am Rohrabschnitt 3 befestigt ist. Vorzugsweise ist dieser Düsenträger 8 an den Rohrabschnitt 3 angeschweißt. Entsprechende Schweißnähte sind in Fig. 2 erkennbar und mit 9 bezeichnet. An diesem Düsenträger 8 ist nun die Einspritzdüse 2 befestigt. Bei der hier gezeigten bevorzugten Ausführungsform dient der Kühlmittelkreis 7 zur direkten Kühlung des Düsenträgers 8 und somit zur indirekten Kühlung der Einspritzdüse 2 über bzw. durch den Düsenträger 8. Zu diesem Zweck ist zum einen der Kühlmittelkreis 7 wärmeübertragend mit dem Düsenträger 8 gekoppelt. Zum anderen ist die Einspritzdüse 2 so am Düsenträger 8 befestigt, dass sich ebenfalls eine möglichst intensive Wärmeübertragung einstellen kann.

Vorzugsweise besitzt der Düsenträger 8 eine Düsenaufnahme 10, die im wesentlichen komplementär zur Einspritzdüse 2 geformt ist und die den Düsenträger 8 radial durchsetzt. Dabei kann die Düsenaufnahme 10 wie hier in Fig. 1 gegenüber einer reinen Radialrichtung, also gegenüber einer Radialebene geneigt sein, beispielsweise um etwa 45°. Dementsprechend besitzt die Richtung, in welcher die Düsenaufnahme 10 den Düsenträger 8 durchsetzt, neben der genannten radialen Komponente außerdem eine axiale Komponente. Wesentlich ist, dass die Düsenaufnahme 10 in der Radialöffnung 5 des Rohrabschnitts 3 mit einem Mündungsende 11 offen mündet.

Die Einspritzdüse 2 ist nun in diese Düsenaufnahme 10 eingesetzt, insbesondere eingesteckt oder eingeschraubt. Die Düsenaufnahme 10 ist dabei so gestaltet, dass sich ein Düsenkopf 12 der in die Düsenaufnahme 10 eingesetzten Einspritzdüse 2 im Bereich der Radialöffnung 5 befindet. Das heißt, der Düsenkopf 12 befindet sich innerhalb des Mündungsendes 11 oder steht über dieses vor, wie in Fig. 1. Dieser Düsenkopf 12 enthält zumindest ein Spritzloch, durch das der Kraftstoff in das Innere des Rohrabschnitts 3 eingedüst bzw. eingespritzt werden kann.

Mit Hilfe der Düsenaufnahme 10, die zweckmäßig komplementär zur Außenkontur mit der Einspritzdüse 2 geformt ist, kann eine besonders großflächige Kontaktierung zwischen Einspritzdüse 2 und Düsenträger 8 erzielt werden, was die Wärmeübertragung zwischen Einspritzdüse 2 und Düsenträger 8 verbessert. Insbesondere führt eine derartige Düsenaufnahme 10, in welche die Einspritzdüse 2 mit einem wesentlichen Längsabschnitt einsetzbar ist, zwangsläufig dazu, dass der Düsenträger 8 die Einspritzdüse 2 in dem in die Düsenaufnahme 10 eingesetzten Längsabschnitt umfangsmäßig vollständig umschließt, was eine besonders intensive Wärmekopplung ermöglicht.

Zusätzlich kann der Düsenträger 8 aus einem Material hergestellt sein, das eine relativ hohe Wärmeleitfähigkeit besitzt. Beispielsweise ist der Düsenträger 8 aus Stahl hergestellt, um ohne weiteres den relativ hohen Temperaturen des Abgasstrangs 4 standhalten zu können. Vorzugsweise ist der Düsenträger 8 aus einem Edelstahl hergestellt, um der aggressiven, insbesondere korrosiven, Umgebung des Abgasstrangs 4 Rechnung zu tragen. Ebenso ist es grundsätzlich möglich, den Düsenträger 8 aus einem anderen Wärmeleitmaterial, wie z. B. Kupfer oder Messing, herzustellen. Vorteilhaft für eine gute Wärmeleitfähigkeit des Düsenträgers 8 ist außerdem eine integrale Bauweise, bei welcher der Düsenträger 8 aus einem Stück hergestellt ist. Hierdurch können isolierende Übergangszonen, die bei einem gebauten Düsenträger 8 auftreten können, vermieden werden.

Bei der hier gezeigten, bevorzugten Ausführungsform ist ein Abschnitt 13 des Kühlmittelkreises 7 in den Düsenträger 8 integriert. Diese teilweise Integration des Kühlmittelkreises 7 in den Düsenträger 8 führt zu einer besonders effektiven Kühlung des Düsenträgers 8 und somit der damit wärmeübertragend gekoppelten Einspritzdüse 2.

Wie insbesondere aus Fig. 2 hervorgeht, weist der in den Düsenträger 8 integrierte Abschnitt 13 des Kühlmittelkreises 7 einen Vorlauf 14 und einen Rücklauf 15 auf, was die Einbindung der Vorrichtung 1 bzw. des Düsenträgers 8 in den Kühlmittelkreis 7 erleichtern.

Wie aus den Fig. 1 bis 3 hervorgeht, ist der Düsenträger 8 an einer dem Rohrabschnitt 3 zugewandten Seite vorzugsweise mit einem Steckabschnitt 16 ausgestattet, der in die Radialöffnung 5 des Rohrabschnitts 3 eindringt bzw. eingesetzt ist. Zweckmäßig ist der Steckabschnitt 16 umfangsmäßig komplementär zur Radialöffnung 5 geformt, wodurch der Steckabschnitt 16 im Einbauzustand die Radialöffnung 5 mehr oder weniger ausfüllt. In diesem Steckabschnitt 16 ist das Mündungsende 11 der Düsenaufnahme 10 angeordnet. Durch die gewählte Neigung der Düsenaufnahme 10 gegenüber einer Radialebene erhält das Mündungsende 11 an der dem Inneren des Rohrabschnitts 3 zugewandten Stirnseite des Steckabschnitts die Form eines Langlochs, was aus Fig. 3 entnehmbar ist.

Die erfindungsgemäße Vorrichtung 1 dient zum Einbringen von Kraftstoff in den Abgasstrang 4 der Brennkraftmaschine 5, die insbesondere in einem Kraftfahrzeug angeordnet sein kann. Gemäß Fig. 4 kann bei einer vorteilhaften Anwendung der erfindungsgemäßen Vorrichtung 1 der Rohrabschnitt 3, an welchem die Vorrichtung 1 am Abgasstrang 4 angebracht ist, stromauf eines Oxidationskatalysators 17 angeordnet sein, der sich seinerseits stromauf eines Partikelfilters 18 befindet. Das Partikelfilter 18 dient dazu, Partikel, welche in den Abgasen der Brennkraftmaschine 5 mitgeführt werden, aus diesen Abgasen herauszufiltern. Um das Partikelfilter 18 regenerieren zu können, wird mit Hilfe der Vorrichtung 1 eine bestimmte Menge an Kraftstoff, der hierzu unter einem vorbestimmten Einspritzdruck steht, in den Abgasstrang 4 eingedüst. Dieser Kraftstoff gelangt so in den Oxidationskatalysator 17, in dem er umgesetzt wird. Hierbei wird Wärme frei, welche die Temperatur des Abgases erhöht. In der Folge kommt es auch im Partikelfilter 18 zu einer Temperaturerhöhung. Bei einer hinreichend hohen Temperatur wird im Partikelfilter 18 ein Abbrand der Partikel, bei denen es sich vorzugsweise um Rußpartikel handelt, initiiert. Der initiierte Abbrandvorgang kann dann selbständig weiterlaufen, da er ebenfalls unter Abgabe von Wärme abläuft. Das bedeutet, dass nach der Initiierung des Abbrandvorgangs die Eindüsung des Kraftstoffs mit Hilfe der Vorrichtung 1 beendet werden kann.

Fig. 4 zeigt eine bevorzugte Ausführungsform, bei welcher der Kühlmittelkreis 7, mit dessen Hilfe die Einspritzdüse 2 gekühlt wird, an einen Kühlkreis 19 der Brennkraftmaschine 5 angeschlossen ist. Dieser Kühlkreis 19 dient zur Kühlung der Brennkraftmaschine 5 und enthält einen entsprechenden Kühler 20, der in der Regel mit einem Gebläse 21 beaufschlagbar ist. Der Aufwand zur Realisierung der Kühlung der Einspritzdüse 2 wird dadurch erheblich reduziert, da insoweit kein komplett eigenständiges Kühlsystem erforderlich ist.

Eine moderne Brennkraftmaschine 5, insbesondere ein Dieselmotor, ist üblicherweise mit einem Kraftstoffversorgungssystem 22 ausgestattet, das nach dem sogenannten "Common-Rail-Prinzip" arbeitet. Hierzu umfasst das Kraftstoffversorgungssystem 22 zumindest eine gemeinsame Kraftstoff-Hochdruckleitung 23, die parallel mehrere, vorzugsweise sämtliche, Einspritzdüsen 24 der Brennkraftmaschine 5 mit unter Hochdruck stehendem Kraftstoff versorgt. Die Hochdruckleitung 23 wird ihrerseits mittels einer Einspritzpumpe 25 gespeist, die an ein Kraftstoffreservoir 26, also an einen Kraftstofftank, angeschlossen ist. Die Einspritzdüsen 24 der Brennkraftmaschine 5 dienen in herkömmlicher Weise zur Einspritzung von Kraftstoff in die Brennräume der Brennkraftmaschine 5.

Im Unterschied dazu kann die Einspritzdüse 2 der erfindungsgemäßen Vorrichtung 1 an ein Zusatz-Kraftstoffversorgungs-system 27 angeschlossen sein, das vom Kraftstoffversorgungssystem 22 der Brennkraftmaschine 5 unabhängig ist. Beispielsweise enthält ein derartiges Zusatz-Kraftstoffver-sorgungssystem 27 eine geeignete Pumpe 28, die den benötigten Einspritzdruck erzeugt. Da zweckmäßig für die Einspritzung in den Abgasstrang derselbe Kraftstoff wie für den Betrieb der Brennkraftmaschine 5 verwendet wird, ist das Zusatz-Kraftstoffversorgungssystem 27 bzw. dessen Pumpe 28 ebenfalls an das Kraftstoffreservoir 26 angeschlossen.

Gemäß einer anderen vorteilhaften Ausführungsform kann die Einspritzdüse 2 der erfindungsgemäßen Vorrichtung 1 auch an die Hochdruckleitung 23 des Kraftstoffversorgungssystems 22 der Brennkraftmaschine 5 angeschlossen sein. Ein unabhängiges, nur für die Vorrichtung 1 vorgesehenes Zusatz-Kraft-stoffversorgungssystem 27 ist dann überflüssig, was die Kosten zur Realisierung der vorliegenden Erfindung deutlich senkt.

Durch die indirekte Kühlung der Einspritzdüse 2 über deren Düsenträger 8 ist es insbesondere möglich, für die Einspritzung des Kraftstoffs eine konventionelle Einspritzdüse 2 zu verwenden, z.B. eine Benzindirekteinspritzdüse, die normalerweise in den Brennraum hineinragt. Insbesondere kann auch eine Einspritzdüse 2 zur Anwendung kommen, die sonst zur Einspritzung von Kraftstoff in einen Brennraum der Brennkraftmaschine 5 dient. Im Extremfall kann die Einspritzdüse 2 der Vorrichtung 1 somit baugleich zu einer der Einspritzdüsen 24 der Brennkraftmaschine 5 sein.

## Patentansprüche

1. Vorrichtung zum Einbringen von Kraftstoff in einen Abgasstrang (4) einer Brennkraftmaschine (5), insbesondere in einem Kraftfahrzeug,
- mit einer Einspritzdüse (2) zum Einspritzen von unter Einspritzdruck stehendem Kraftstoff in den Abgasstrang (4) durch eine Radialöffnung (5) in einem Rohrabschnitt (3) des Abgasstrangs (4),
- wobei die Einspritzdüse (2) mit einem Kühlmittelkreis (7) wärmeübertragend gekoppelt ist,
- wobei die Einspritzdüse (2) an einem Düsenträger (8) befestigt ist, der seinerseits am Rohrabschnitt (3) befestigt ist,
- wobei der Düsenträger (8) mit dem Kühlmittelkreis (7) wärmeübertragend gekoppelt ist, so dass die Einspritzdüse (2) mittelbar durch oder über den Düsenträger (8) mit dem Kühlmittelkreis (7) wärmeübertragend gekoppelt ist,
- wobei der Düsenträger (8) eine Düsenaufnahme (10) enthält, die den Düsenträger (8) radial durchsetzt und in der Radialöffnung (5) des Rohrabschnitts (3) offen mündet,
- wobei die Einspritzdüse (2) mit einem wesentlichen Längsabschnitt in die Düsenaufnahme (10) eingesetzt ist, so dass sich ein Düsenkopf (12) der Einspritzdüse (2) im Bereich der Radialöffnung (5) befindet.

2. Vorrichtung nach Anspruch 1,
**dadurch gekennzeichnet,**
**dass** der Düsenträger (8) einen Steckabschnitt (16) aufweist, der in die Radialöffnung (5) des Rohrabschnitts (3) eingesetzt ist und in dem sich ein Mündungsende (11) der Düsenaufnahme (10) befindet.

3. Vorrichtung nach Anspruch 1 oder 2,
**dadurch gekennzeichnet,**
**dass** zumindest ein Abschnitt (13) des Kühlmittelkreises (7) in den Düsenträger (8) integriert ist.

4. Vorrichtung nach einem der Ansprüche 1 bis 3,
**dadurch gekennzeichnet,**
**dass** der Düsenträger (8) aus einem Material mit relativ hoher Wärmeleitfähigkeit hergestellt ist.

5. Vorrichtung nach Anspruch 4,
**dadurch gekennzeichnet,**
**dass** der Düsenträger (8) aus Stahl oder Edelstahl hergestellt ist.

6. Vorrichtung nach einem der Ansprüche 1 bis 5,
**dadurch gekennzeichnet,**
**dass** der Düsenträger (8) aus einem Stück hergestellt ist.

7. Vorrichtung nach einem der Ansprüche 1 bis 6,
**dadurch gekennzeichnet,**
**dass** der Düsenträger (8) an den Rohrabschnitt (3) angeschweißt ist.

8. Vorrichtung nach einem der Ansprüche 1 bis 7,
**dadurch gekennzeichnet,**
**dass** der Kühlmittelkreis (7) an einen Kühlkreis (19) der Brennkraftmaschine (5) angeschlossen ist.

9. Vorrichtung nach einem der Ansprüche 1 bis 8,
**dadurch gekennzeichnet,**
- **dass** die Einspritzdüse (2) an ein Kraftstoffversorgungssystem (22) der Brennkraftmaschine (5) angeschlossen ist, insbesondere an eine gemeinsame Kraftstoff-Hochdruckleitung (23) eines Common-Rail-Systems, oder
- **dass** die Einspritzdüse (2) an ein von einem Kraftstoffversorgungssystem (22) der Brennkraftmaschine (5) unabhängiges Zusatz-Kraftstoffversorgungssystem (27) angeschlossen ist.

10. Abgasstrang einer Brennkraftmaschine (5), insbesondere in einem Kraftfahrzeug, mit einer Vorrichtung (1) nach einem der Ansprüche 1 bis 9 zum Einbringen von Kraftstoff in den Abgasstrang (4).

## Claims

1. A device for introducing fuel into an exhaust gas line (4) of an internal combustion engine (5), in particular in a motor vehicle,
- with a fuel injector (2) for injecting fuel under injection pressure into the exhaust line (4) through a radial opening (5) in a pipe section (3) of the exhaust line (4),
- whereby the fuel injector (2) is connected to a coolant circuit (7) in a manner suitable for heat transfer,
- whereby the fuel injector (2) is mounted on a nozzle carrier (8) which is in turn mounted on the pipe section (3),
- whereby the nozzle carrier (8) is connected to the coolant circuit (7) in a manner suitable for heat transfer so that the fuel injector (2) is connected to the coolant circuit (7) indirectly via or through the nozzle carrier (8),
- whereby the nozzle carrier (8) has a nozzle receptacle (10) which passes radially through the nozzle carrier (8) and opens into the radial opening (5) of the pipe section (3),
- whereby the fuel injector (2) is inserted into the nozzle receptacle (10) with an essential longitudinal section so that a nozzle head (12) of the fuel injector (2) is situated in the area of the radial opening (5).

2. The device according to Claim 1,
**characterized in that**
the nozzle carrier (8) has a section (16) which is inserted into the radial opening (5) of the pipe section (3) and in which one mouth end (11) of the nozzle receptacle (10) is situated.

3. The device according to Claim 1 or 2,
**characterized in that**
at least one section (13) of the coolant circuit (7) is integrated into the nozzle carrier (8).

4. The device according to any one of Claims 1 through 3,
**characterized in that**
the nozzle carrier (8) is made of a material having a relatively high thermal conductivity.

5. The device according to Claim 4,
**characterized in that**
the nozzle carrier (8) is made of steel or stainless steel.

6. The device according to any one of Claims 1 through 5,
**characterized in that**
the nozzle carrier (8) is manufactured in one piece.

7. The device according to any one of Claims 1 through 6,
**characterized in that**
the nozzle carrier (8) is welded to the pipe section (3).

8. The device according to any one of Claims 1 through 7,
**characterized in that**
the coolant circuit (7) is connected to a coolant circuit (19) of the internal combustion engine (5).

9. The device according to any one of Claims 1 through 8,
**characterized in that**
- the fuel injector (2) is connected to a fuel supply system (22) of the internal combustion engine (5), in particular to a common highpressure fuel line (23) of a common rail system, or
- the fuel injector (2) is connected to an additional fuel supply system (27) that is independent of the fuel supply system (22) of the internal combustion engine (5).

10. The exhaust line of an internal combustion engine (5), in particular in a motor vehicle, having a device (1) according to any one of Claims 1 through 9 for introducing fuel into the exhaust line (4).

## Revendications

1. Dispositif pour introduire du carburant dans une ligne d'échappement (4) d'un moteur à combustion interne (5), notamment dans un véhicule automobile,
- comportant une buse d'injection (2) pour injecter du carburant sous une pression d'injection dans la ligne d'échappement (4) à travers une ouverture radiale (5) dans une section tubulaire (3) de la ligne d'échappement (4),
- dans lequel la buse d'injection (2) est couplée de manière thermoconductrice avec un circuit de fluide de refroidissement (7),
- dans lequel la buse d'injection (2) est fixée sur un support de buse (8), qui est pour sa part fixé sur la section tubulaire (3),
- dans lequel le support de buse (8) est couplé de manière thermoconductrice au circuit de fluide de refroidissement (7), de telle sorte que la buse d'injection (2) soit indirectement couplée de manière thermoconductrice au circuit de fluide de refroidissement (7) à travers ou par l'intermédiaire du support de buse (8),
- dans lequel le support de buse (8) contient un réceptacle de buse (10), qui traverse radialement le support de buse (8) et débouche en étant ouvert dans l'ouverture radiale (5) de la section tubulaire (3),
- dans lequel la buse d'injection (2) est enfoncée par une section essentiellement longitudinale dans le réceptacle de buse (10), de telle sorte que une tête de buse (12) de la buse d'injection (2) se trouve au niveau de l'ouverture radiale (5).

2. Dispositif selon la revendication 1,
**caractérisé en ce que**
le support de buse (8) présente une section d'enfichage (16), qui est enfoncée dans l'ouverture radiale (5) de la section tubulaire (3) et dans laquelle se trouve une extrémité débouchante (11) du réceptacle de buse (10).

3. Dispositif selon la revendication 1 ou 2,
**caractérisé en ce que**
au moins une portion (13) du circuit de fluide de refroidissement (7) est intégrée au support de buse (8) .

4. Dispositif selon une des revendications 1 à 3,
**caractérisé en ce que**
le support de buse (8) est fabriqué dans un matériau ayant une conductivité thermique relativement élevée.

5. Dispositif selon la revendication 4,
**caractérisé en ce que**
le support de buse (8) est fabriqué en acier ou en acier inoxydable.

6. Dispositif selon une des revendications 1 à 5,
**caractérisé en ce que**
le support de buse (8) est fabriqué en une pièce.

7. Dispositif selon une des revendications 1 à 6,
**caractérisé en ce que**
le support de buse (8) est soudé sur la section tubulaire (3).

8. Dispositif selon une des revendications 1 à 7,
**caractérisé en ce que**
le circuit de fluide de refroidissement (7) est raccordé à un circuit de refroidissement (19) du moteur à combustion interne (5).

9. Dispositif selon une des revendications 1 à 8,
**caractérisé en ce que**
- la buse d'injection (2) est raccordée à un système d'alimentation en carburant (22) du moteur à combustion interne (5), notamment à une conduite de carburant à haute pression (23) d'un système à rampe commune, ou
- la buse d'injection (2) est raccordée à un système d'alimentation en carburant auxiliaire (27) indépendant du système d'alimentation en carburant (22) du moteur à combustion interne (5) .

10. Ligne d'échappement d'un moteur à combustion interne (5), notamment dans un véhicule automobile, comportant un dispositif (1) selon une des revendications 1 à 9 pour introduire du carburant dans la ligne d'échappement (4).
